# EUROPEAN PATENT SPECIFICATION

(11) **EP 1 669 404 B1**
(45) Date of publication and mention of the grant of the patent: **19.11.2008**
(21) Application number: 04762146.1
(22) Date of filing: 02.09.2004
(51) Int. Cl.: C08L 25/00, C08L 23/00, C08L 23/02

(54) **WATER-DISINTEGRABLE ENVIRONMENTALLY FRIENDLY MACROMOLECULAR BLEND MATERIALS AND THE PROCESS FOR PREPARATION THEREOF**
WASSERDESINTEGRIERBARE UMWELTFREUNDLICHE MAKROMOLEKULARE BLENDMATERIALIEN UND HERSTELLUNGSVERFAHREN DAFÜR
MATIERES DE MELANGE MACROMOLECULAIRES ECOLOGIQUES ET DESINTEGRABLES DANS L'EAU ET PROCEDE DE PREPARATION DE CES MATIERES

(30) Priority: 09.09.2003 CN 03139221
(43) Date of publication of application: 14.06.2006
(73) Proprietor: Polymer Science & Engineering College of Qingdao University of Science & Technology, Quingdao, Shandong 266042 (CN)
(72) Inventor: YU, Shanpu, Qingdao, Shandong 266061 (CN); XU, Fugui, Jimo,Shandong 266227 (CN); LIU, Yuyong, Qingdao, Shandong 266042 (CN); HUANG, Zhaoge, Sifang District,Qingdao Shandong 266042 (CN); SHI, Xianzong, Sifang District, Qingdao Shandong 266042 (CN)
(74) Representative: Müller, Wolfram Hubertus
(86) International application number: PCT/CN2004/001011
(87) International publication number: WO 2005/023932

(56) References cited:
- EP-A1- 1 193 545
- EP-A2- 0 427 219
- WO-A2-03/053298
- CN-A- 1 106 839
- CN-A- 1 415 651
- US-A- 5 510 401

## Description

### Field of the Invention

The present invention relates to a macromolecular material, in particular, an environment-friendly macromolecular material formed by blending water-absorbent resin particles into a rigid, especially foamed polymer, such as polystyrene, polymethyl methacrylate, polychloroethylene or polyethylene. Said material will disintegrate into powder or lose its intensity at a certain rate over a certain time in the presence of water. The present invention also relates to processes for preparing the same.

### Background of the Invention

As the negative consequences of environmental pollution are realized more clearly, it is of necessity to modify pollutive macromolecular materials to make them friendly to the environment. Currently, foamed polystyrene materials, which are used as packing liners of various household appliances and disposable meal boxes, constitute one of the primary white-pollution sources due to their low specific density, easy movement by wind and water, and difficulties in recovery and degradation.

It has been reported that processes for modifying such materials to make them non-pollutive are mainly as follows: addition of photo-degradation agent into the materials so as to cause the materials to be gradually degraded under light; blending of starch, cellulose, and the like into the materials so that the materials can be gradually degraded or lost intensity through the action of microorganism; and so on. All of these processes have disadvantages, such as long degradation time, uncontrollable degradation rate, great difficulties in processing and high cost, which render them hard to be widely used. Therefore, there is still a need for solving the pollution problem caused by foamed polystyrene.

### Summary of the Invention

The object of the present invention is to overcome the above-mentioned disadvantages and provide a novel water-disintegrable environment-friendly macromolecular material, and processes for preparing the same. The rate of disintegration into powder and the rate of losing intensity of the material can be determined by the content, dispersion state and expansion capacity of the water-absorbent resin. Since the preparation processes of the novel material can be readily conducted with lower cost, and the water disintegration rate can be controlled, the novel material is especially suitable for replacing the currently used foamed polystyrene package and disposable packing materials such as disposable meal boxes, which are heavily pollutive and difficult to be recycled and degraded.

The above object is achieved by the polymerization a mixture of one or more oil-soluble monomers, which will form a rigid plastic after polymerization, water-absorbent polymer particles and a blending dispersant. The water absorbent polymer particles have an average particle size of not more than 5 µm. The mixture for polymerization comprises 7.5-25 wt% of the water-absorbent polymer particles, 0.5-15 wt% of the blending dispersant, and the balance is consisted of the monomers, which will form a rigid plastic after polymerization, and a small amount of initiator. The monomers, which will form a rigid plastic after polymerization, comprise ethylene, styrene, chloroethylene, methyl methacrylate and vinyl acetate. The obtained rigid plastic can also be a copolymer having no crosslinked structure formed from two or more of the above-mentioned monomers. The water-absorbent polymer particles comprise crosslinked polymer particles formed by homopolymerization or copolymerization of one or more water-soluble monomers such as methacrylate, methacrylamide, and sodium propylene sulfonate, with one of crosslinkable monomers, such as methylene bisacrylamide and itaconate. The blending dispersant comprises one or more sorbitan esters with low HLB value, such as SPAN-80, SPAN-60 and SPAN-85, or it can be a composition of a sorbitan ester with a TX type or a OP type polyethylene oxide ether surfactant having high HLB value.

The rigid plastic formed by the polymerization can also be a toughened copolymer having no crosslinked structure formed from one or more of ethylene, styrene, chloroethylene, methyl methacrylate and vinyl acetate, with a small amount of one or more of ethyl acrylate, butyl acrylate, 2-ethyl hexyl acrylate, butadiene and isoprene.

The water-absorbent polymer particles can also be a crosslinked copolymer formed from a natural macromolecular material, such as starch and cellulose, graft-modified with a water-soluble monomer, or it can be a product formed from a natural macromolecular material, such as starch and cellulose, graft-copolymerized with acrylonitrile, followed by hydrolyzation and saponification.

The initiator is selected from a group consisting of BPO type peroxides, AIBN type azo compounds, persulphate type inorganic peroxides, and oxidation-reduction systems formed of peroxides with alkyl metallic compounds.

It was found by the inventor that after water-absorbent resin particles containing no or a small amount of water were blended into a rigid plastic, such as polystyrene, the plastic would disintegrate into powder or lose intensity due to the expansion effect of the water-absorbent resin particles in the presence of water, and that the rate of disintegrating into powder and the rate of losing intensity could be controlled by the content, dispersion state and expansion capacity of the water-absorbent resin. Thus, a fully novel water-disintegrable environment-friendly macromolecular material has been invented.

Also, the preparation processes of the above said material have been invented firstly by the inventor.

The first preparation process of the material of the present invention is called monomer-polymer blending polymerization, comprising the following steps:
□ adding a blending dispersant and an initiator, such as BPO, into one or more monomers, which will form a rigid plastic after polymerization, heating the resultant mixture to 60 Deg C so as to dissolve the blending dispersant;
□ further adding water-absorbent polymer particles with particle size not more than 1 µm, and stirring the resultant mixture for uniformity;
□ introducing into the system highly pure nitrogen to evacuate oxygen and then carrying out polymerization for 2 hours; and
□ raising the temperature to 70 Deg C and conducting the polymerization for another 2 hours.

The second preparation process is called reverse-phase emulsion polymerization, comprising the following steps: adding a W/O blending emulsifier into one or more oil-soluble monomers, which will form a rigid plastic after polymerization, heating the resultant mixture to 60 Deg C so as to dissolve the blending emulsifier; further adding water, one or more water-soluble monomers, such as sodium (meth)acrylate, acrylamide and sodium propylene sulfonate, a small amount of a crosslinkable monomer, such as methylene bisacrylamide and sodium itaconate, as well as two kinds of initiators dissolvable in oil phase and in water phase respectively; stirring violently to emulsify the mixture system, introducing highly pure nitrogen to evacuate oxygen and making each of the monomers in the two phases of the emulsified system polymerize simultaneously or in sequence; and raising the temperature and conducting the polymerization further. Specifically, the steps are as follows:
□ adding a blending dispersant into one or more oil-soluble monomers, which will form a rigid plastic after polymerization, heating the resultant mixture to 60 Deg C so as to dissolve the blending dispersant, adding a small amount of an oil-soluble initiator (0.1%-1 wt% with respect to the oil-soluble monomers);
□ adding 7%-25 wt% of one or more water-soluble monomers with respect to the oil-soluble monomers, 0.05%-0.5 wt% of a water-soluble crosslinkable monomer with respect to the water-soluble monomers, 0.1%-1 wt% of a water-soluble initiator with respect to the water-soluble monomers, and deionized water 2.5-3.5 times relative to the water-soluble monomers;
□ introducing highly pure nitrogen to evacuate oxygen for 0.5 hours; and
□ raising the temperature to carry out polymerization, i.e. raising the temperature to 60Deg C and conducting polymerization for 2 hours, and then raising the temperature to 80 Deg C and conducting polymerization for another 2 hours.

In the above two processes, the first one for preparing the inventive material is called monomer-polymer blending polymerization, wherein adding fine water-absorbent polymer particles and a blending dispersant into one or more oil-soluble monomers, which will form a rigid plastic after polymerization, such as styrene, and carrying out the polymerization so as to make the fine water-absorbent polymer particles being evenly dispersed in the obtained polymer, such as polystyrene. The main factors that influence the preparation of the material of the present invention in this process comprise the particle size, the capacity of absorbing water and the adding amount of the fine water-absorbent polymer particles, the amount and properties of the dispersant added, as well as the polymerization conditions. Compared with conventional mechanical blending process, the present process does not include a mechanical blending procedure, and overcomes the defect that it is difficult for blending strongly polar fine water-absorbent polymer particles into water-insoluble polymers evenly and said particles may have negative effects on the physical-mechanical properties of the water-insoluble polymers after blending thereinto. The present process also ensures desirable properties of the obtained polymer, such as polystyrene, by selecting the polymerization conditions according to requirements.

In the first process, the monomers, which will form a rigid plastic after polymerization, comprise ethylene, styrene, chloroethylene, methyl methacrylate, vinyl acetate and the like, and it is possible to copolymerize these monomers or copolymerize these monomers with a small amount of other monomers, which will form flexible polymers after polymerization, such as ethyl acrylate, butyl acrylate, 2-ethyl hexyl acrylate, butadiene, isoprene and the like, so as to increase the toughness of the resultant polymers. The final polymers contain no crosslinked structures and can disintegrate in the presence of water, and they are unlike elastomers, such as rubbers, which are only swollen but do not disintegrate after water absorption even when water-absorbent polymer particles have been blended thereinto.

Said fine water-absorbent polymer particles comprise crosslinked homopolymer or copolymer formed from one or more water-soluble monomers, such as (meth)acrylate, (meth)acrylamide, sodium propylene sulfonate, and the like, with a crosslinkable monomer, such as methylene bisacrylamide, itaconate and the like. The water-absorbent polymer can also be a crosslinked copolymers of a natural macromolecular material, such as starch and cellulose, graft-modified with one or more of the above-mentioned water-soluble monomers, or it can be a grafted copolymer of a natural macromolecular material with acrylonitrile, followed by hydrolyzation and saponification. The fine water-absorbent polymer particles containing natural macromolecular material component therein further impart biodegradability to the material of the present invention. Thus, it is possible to add a small amount of the fine water-absorbent polymer particles during the preparation of the material of the present invention, so as to produce a macromolecular material, which do not disintegrate readily in the presence of water, but can rapidly degrade in the presence of microorganisms, thereby shortening the degradation time of the material. Depending on the water-absorbing capacity of the fine water-absorbent polymer particles, the blending conditions, the applied amount and properties of the dispersant, the minimum weight percentage of the fine water-absorbent polymer particles in the rigid plastic is different and is generally around 8%. If it is lower than said range, the blend material will not disintegrate in the presence of water. If it is higher than said range, the water disintegration rate of the blend material will be too rapid. The particle size of the fine water-absorbent polymer particles is as small as possible, and generally not more than 5 µm, Smaller particle size not only reduce the influence of the added water-absorbent polymer particles on the physical-mechanical properties of the product, but also reduce the applied amount of the water-absorbent polymer particles for achieving the same water disintegration rate.

Said blending dispersant comprises surfactants with low HLB value, such as SPAN-80, SPAN-60, SPAN-85 and the like. In order to achieve the optimum effect, it is sometimes necessary to further add a surfactant with high HLB value, such as TX-10. The applied amount of the blending dispersant is generally 0.5%-5 wt% with respect to the weight of the material of the present invention. The properties and applied amount of the dispersant not only affect the dispersion of the fine water-absorbent polymer particles in the material, but also affect the water-disintegration rate thereof. It is therefore important in the present process to select suitable dispersant and polymerization conditions.

The polymerization in the first process is generally a free radical polymerization. The type of the added initiator and the applied amount thereof are determined according to the desired molecular weight and molecular weight distribution of the polymer, as well as the polymerization conditions. Applicable initiator comprises peroxides, such as BPO, azo compounds, such as AIBN, and oxidation-reduction systems formed from peroxides and alkyl metallic compounds.

The second process for preparing the material of the present invention is called reverse-phase emulsion polymerization, wherein one or more oil-soluble monomers, such as styrene and the like, are used as oil phase, and one or more water-soluble monomers, such as acrylate, methylene bisarylamide, and the like, are used as water phase, and a W/O emulsifier, an oil-soluble initiator and a water-soluble initiator are added into the oil phase and the water phase, and then the resultant mixture is subjected to agitation to obtain a stable reversed phase emulsion, then making the monomers in the two phases polymerize simultaneously or in sequence to form a water-disintegrable environment-friendly macromolecular material, wherein hydrogel particles are evenly and stably dispersed in the macromolecular material. Said material may or may not be subjected to dehydration. In comparison with the first process, the advantage of this process lies in that the properties of the water-absorbent polymers and the porperties of the final materials, such as blended polystyrene, can be determined by selecting conditions according to requirements. It is preferable that water is used as a foaming agent or as one of the components of a foaming agent.

The oil-soluble monomers used in the second process are the same as those used in the first process, and the water-soluble monomers used in the second process are the same as those monomers (raw material) used for forming the fine water-absorbent polymer particles in the first process. When starch and cellulose are used, it is necessary to add, for example, urea or sodium hydroxy, to make them dissolved in water to facilitate the emulsification. During polymerization, it is possible to firstly polymerize the monomers in water phase or to polymerize the monomers in both phases simultaneously. For a system that is well emulsified and no phase separation happened for a long time, the polymerization is carried out by adding an oil-soluble initiator and a water-soluble initiator respectively into the two phases, followed by heating. For an emulsion system without high stability, it is necessary to carry out polymerization at elevated temperature with agitation and keep agitating until the monomers, such as styrene, in the oil phase polymerize to a certain conversion degree and the system has become viscous, so as to avoid the precipitation of the water phase, which would affect the uniformity of the polymers.

The oil-soluble initiator used in the second process is the same as that used in the first process. But it is preferable to use a peroxide, such as BPO, alone since when alkyl metallic compound is used as reductant in the oxidation-reduction initiation system, due to the water contained in the system, the efficiency is low. The initiator for the water phase is generally an inorganic peroxide, such as potassium persulphate, ammonium persulphate, hydrogen peroxide and the like, and it can also be an oxidation-reduction initiation system formed by any of the above-mentioned peroxides with iron(II) sulphate, sodium thiosulphate or the like.

The weight ratio of the monomers in the oil phase and the monomers in the water phase is between 90:10 and 10:90, and when the ratio varies, it is usually not required to change the emulsification conditions. However, when the ratio of the monomers in the water phase to water is changed, it is generally necessary to adjust the emulsifier and emulsification conditions and even polymerization conditions. Therefore, it is preferable to firstly determine the ratio between the monomers in the oil phase and the monomers in the water phase according to the desired water disintegration rate of the product and then determine the ratio of the monomers in the water phase to water according to the requirements for polymerization stability.

The second process generally utilizes free radical polymerization, and it is necessary to evacuate oxygen and select appropriate initiator and polymerization conditions.

The material of the present invention is most applicable in packing materials for household appliances that need to be obviated long time contact with water, and also applicable in disposable meal boxes after surface water-proof treatment. The material can be made into films and foamed liners of various shapes. During the preparation of a foamed product, it is possible to directly add a foaming agent during the polymerization. In this case, the type and the applied amount of the foaming agent and the foaming conditions will determine the foaming properties of the product.

In the preparation of foamed materials, if conventional organic foaming agents are used, the first process is preferable, since it is possible to add a foaming agent into the monomers during the polymerization, and conduct a direct polymerization and granulation. In the second process, water can be used as a foaming agent, so that little or no organic foaming agent is needed and the environment pollution caused by the organic foaming agent is reduced.

### Brief Description of the Drawings

Figure 1 illustrates the water disintegration rates of the materials obtained in examples 1-5 (wherein the contents of polyacrylate are different) at 30°C;
Figure 2 illustrates the water disintegration rate of the materials obtained in examples 6-10 (wherein the W/O ratios are different) at 20°C; and
Figure 3 illustrates the water disintegration rate of the materials obtained in examples 6-10 (wherein the W/O ratios are different) at 60°C.

### Detailed Description of the Invention

### Example 1

Preparation of a water-disintegrable environment-friendly macromolecular blend material by the first process.

93 g chemically pure styrene containing a polymerization retarder and 4 g SPAN-60 were charged into a 250 mL three-necked round-bottom flask. After the mixture was heated to 60°C to dissolve SPAN-60, 7 g water-absorbent particles of sodium polyacrylate crosslinked with methylene bisacrylamide and 0.3 g dibenzoyl peroxide were added, wherein the water-absorbent particles had an average particle size of about 1 µm. Under agitation, highly pure nitrogen was introduced to evacuate oxygen, followed by 2-hour polymerization. After the temperature was raised to 70°C, the polymerization was conducted for another 2 hours, and a polystyrene blend containing 7% water-absorbent particles of crosslinked sodium polyacrylate was obtained. The blend had no change after being soaked in water at 30°C for 12 hours, which demonstrated that when the polymerized product contains less than 7% water-absorbent polymer particles, it had no water disintegration property over the test time.

### Example 2

Preparation of a water-disintegrable environment-friendly macromolecular blend material by the first process.

Polymerization was conducted in the same way as that in Example 1, except that the ratio of styrene to the water-absorbent polymer particles was changed so that the resultant blend material contained 8% water-absorbent particles of crosslinked sodium polyacrylate. After being soaked in water at the same temperature for 12 hours, the surface of the product turned white and its edge came into disintegration.

### Examples 3-5

Preparation of water absorbent environment-friendly macromolecular blend materials by the first process.

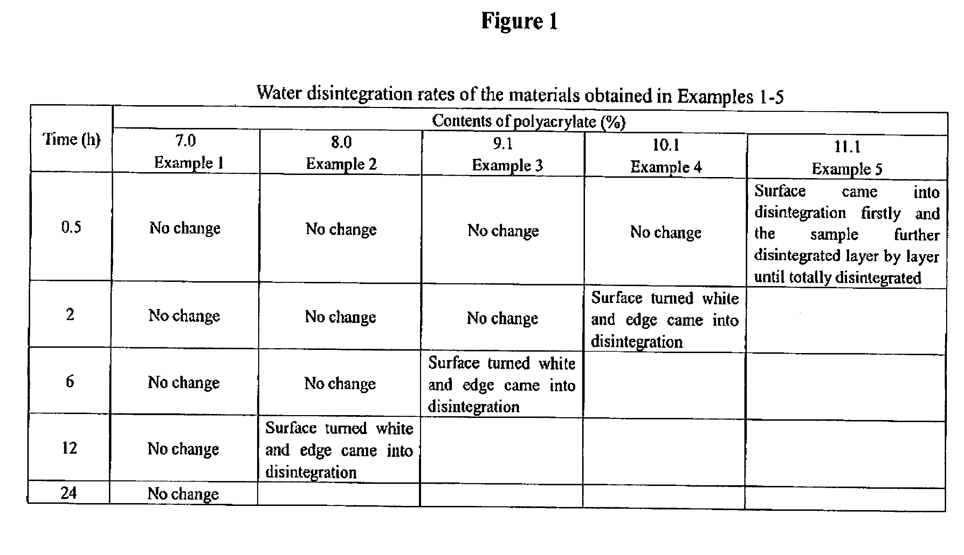

In each of these Examples, polymerization was conducted in the same way as that in Example 1, except that the content of the water-absorbent polymer particles in the blend material was further increased, and the water disintegration rate of the product was further improved. The detailed results are shown in Figure 1.

### Example 6

Preparation of a water-disintegrable environment-friendly macromolecular blend material by the second process.

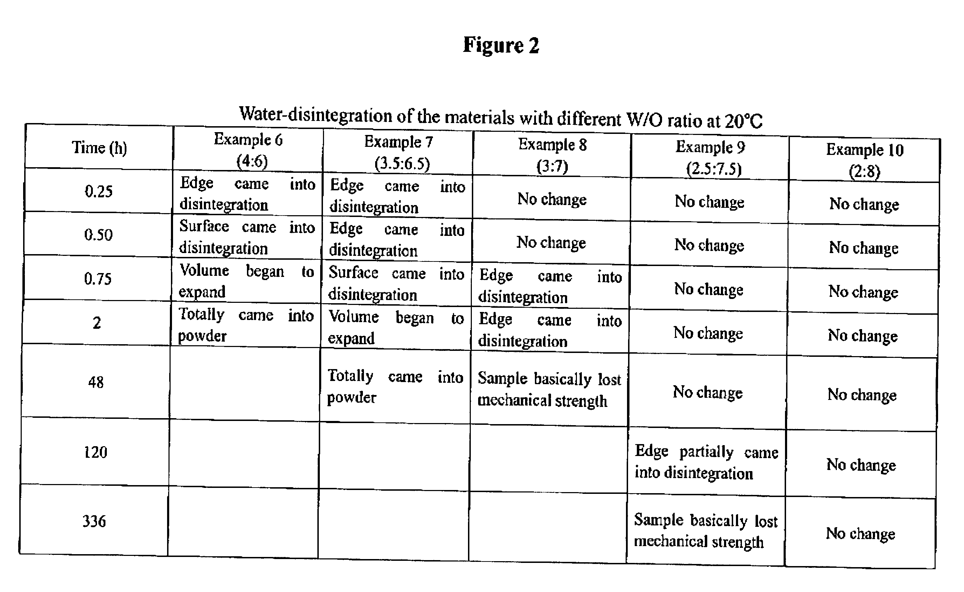

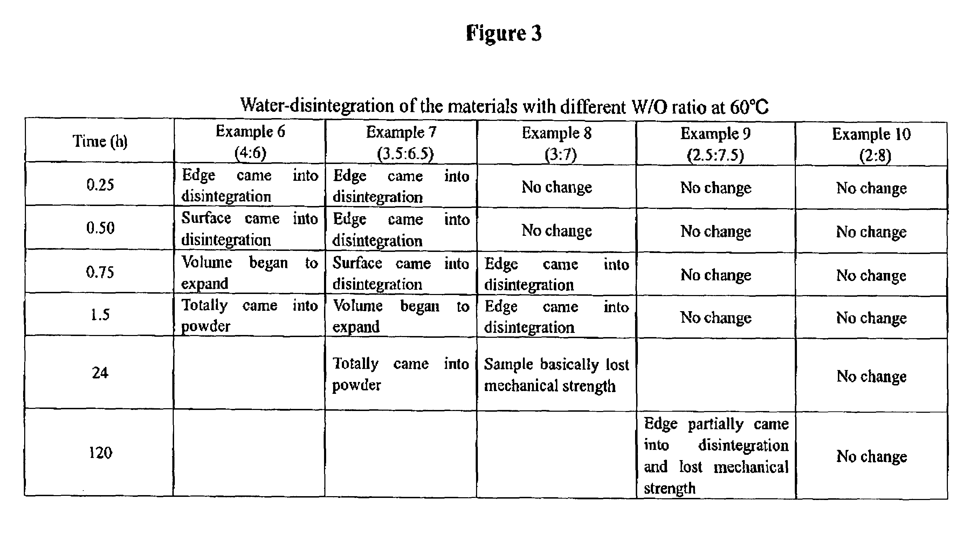

60 g styrene containing a small amount (0.01%) of hydroquinone, 2 g SPAN-60 and 0.18 g BPO were charged into a 250 mL round-bottom flask equipped with an agitator, a water bath and an inlet for nitrogen gas. After the mixture was heated to 60°C, a solution containing 15 g sodium acrylate, 25 g deionized water, 0.03 g potassium persulphate and 0.03 g methylene bisacrylamide were added. After violent agitation for 30 minutes, highly pure nitrogen was introduced to evacuate oxygen for 30 minutes, followed by 2-hour polymerization at 60°C and a further 2-hour polymerization at 80°C. The disintegration properties of the resultant materials soaked in tap water at 20°C and 60°C respectively are shown in Figures 2 and 3.

### Examples 7-10

Preparation of a water-disintegrable environment-friendly macromolecular blend material by the second process.

In each of these examples, polymerization was conducted in the same way as that in Example 6, and the ratio between water and sodium acrylate and the ratio between the initiator and monomers in the two phases were not changed, except that the W/O ratio was varied. The water disintegration properties of the resultant materials are shown in Figures 2 and 3.

From Figure 1, which shows the results of the first process for preparing the water-disintegrable material, it can be seen that when the material contains 8% of the water-absorbent polymer particles, it comes into disintegration after 12 hours, while when the material contains 11% of the water-absorbent polymer particles, it comes into disintegration after 30 minutes. From Figures 2-3, which show the results of the second process for preparing the water-disintegrable material, it can be seen that when the resultant material contains 25% of the water-absorbent polymer particles, its edge comes into disintegration after 15 minutes, while when the material contains 16% of the water-absorbent polymer particles, it comes into disintegration after 120 hours. It also can be seen that when the contents of the water-absorbent polymer particles in the resultant materials are the same, the products obtained by the second process have lower water disintegration rates than those obtained by the first process. The reason may lies in that the water-absorbent polymer particles obtained in the two preparation processes have different water absorption capacities and that part of the water-absorption capacity of the product produced by the second process is lost due to the product obtained by the second process already contains some water. It can be seen from the comparison of Figures 2 and 3 that temperature has little effect on the rate of water disintegration or losing intensity of the material of the present invention. Therefore, the material of the present invention can be used as an environment-friendly macromolecular material intended to be used under high temperature, such as disposable meal boxes. Furthermore, the polymerization of polystyrene in the continuous phase in the preparation of the material can utilize the conventional synthesis process of polystyrene, and thus the obtained material has little change in physical-mechanical properties so as to satisfy the requirements of replacing existing materials.

### Example 11

Preparation of a water-disintegrable environment-friendly macromolecular blend material.

A macromolecular blend material was formed by carrying out polymerization of a mixture of one or more oil-soluble monomers, which would form a rigid plastic after polymerization, water-absorbent polymer particles with particle size not more than 5 µm, a blending dispersant and trace amount of BPO initiator. The mixture for the polymerization contained 25 wt% of the water-absorbent polymer particles and 0.5 wt% of the blending dispersant based on the total weight of the mixture, and the balance was consisted of the oil-soluble monomers and the initiator. Said oil-soluble monomers comprised styrene. Said water-absorbent polymer particles comprised crosslinked homopolymer or copolymer of methacrylate and crosslinkable methylene bisacrylamide monomer. Said blending dispersant comprised surfactant SPAN-80 with low HLB value.

### Example 12

Preparation of a water-disintegrable environment-friendly macromolecular blend material.

A macromolecular blend material was formed by carrying out polymerization of the a mixture of one or more oil-soluble monomers, which would form a rigid plastic after polymerization, water-absorbent polymer particles with particle size not more than 1 µm, a blending dispersant and trace amount of AIBN initiator. The mixture for the polymerization contained 7.5 wt% of the water-absorbent polymer particles and 15 wt% of the blending dispersant, based on the total weight of the mixture, and the balance was consisted of the oil-soluble monomers and the initiator. Said oil-soluble monomers comprised methyl methacrylate. Said water-absorbent polymer particles comprised crosslinked copolymer of a water-soluble sodium propylene sulfonate monomer and a crosslinkable itaconate monomer. Said blending dispersant comprised surfactant SPAN-60 with low HLB value.

### Example 13

Preparation of a water-disintegrable environment-friendly macromolecular blend material.

A macromolecular blending material was formed by carrying out polymerization of a mixture of one or more oil-soluble monomers, which would form a rigid plastic after polymerization, water-absorbent polymer particles with particle size not more than 1 µm, a blending dispersant and trace amount of BPO initiator. The mixture for the polymerization contained 9 wt% of the water-absorbent polymer particles and 5 wt% of the blending dispersant, based on the total weight of the mixture, and the balance was consisted of the oil-soluble monomers and the initiator.

Said oil-soluble monomers comprised ethylene and methyl methacrylate, and they could form a copolymer without crosslinked structure. The water-absorbent polymer particles comprised crosslinked copolymer of a water-soluble methacrylate monomer and a crosslinkable methylene bisacrylamide monomer. The blending dispersant comprised surfactant SPAN-60 with low HLB value.

The blend materials obtained in Examples 11-13 involve lower costs and have controllable water disintegration rate and therefore are especially suitable for replacing currently used packing materials, such as foamed polystyrene, which are heavily pollutive and have difficulties in recovery and degradation.

## Claims

1. A water-disintegrable environment-friendly macromolecular blend material, **characterized in that** it is prepared by blending a mixture of a rigid plastic, such as polystyrene, water-absorbent polymer particles containing or not containing water, and a blending dispersant, wherein the water-absorbent polymer particles have an average particle size of not more than 5 µm, and said particles constitute 7.5-25 wt% of the total weight of the blend material, and the blending dispersant constitutes 0.5-15 wt% of the total weight of the blend material.

2. The water-disintegrable environment-friendly macromolecular blend material according to claim 1, **characterized in that** said rigid plastic is a polymer of one or more monomers selected from the group consisting of ethylene, styrene, chloroethylene, methyl methacrylate and vinyl acetate; said water-absorbent polymer particles comprise crosslinked polymer particles formed by homopolymerization or copolymerization of one or more water-soluble monomers, such as methacrylate, acrylate, methacrylamide, acrylamide, and sodium propylene sulfonate, with a crosslinkable monomer, such as methylene bisacrylamide and itaconate; and said blending dispersant comprises one or more dispersant selected from the group consisting of sorbitan esters with low HLB value, such as SPAN-80, SPAN-60 and SPAN-85, or it can be a composition of a sorbitan ester with a TX type or an OP type polyethylene oxide ether surfactant with high HLB value.

3. The water-disintegrable environment-friendly macromolecular blend material according to claim 1, **characterized in that** said rigid plastic is a toughened copolymer having no crosslinked structure and it is formed from one or more monomers selected from the group consisting of ethylene, styrene, chloroethylene, methyl methacrylate and vinyl acetate, copolymerized with a small amount of one or more monomers selected from the group consisting of ethyl acrylate, butyl acrylate, 2-ethylhexyl acrylate, butadiene and isoprene.

4. The water-disintegrable environment-friendly macromolecular blend material according to claim 1, **characterized in that** said water-absorbent polymer comprises a crosslinked copolymer of starch or cellulose graft-modified with a water-soluble monomer, and a product formed by starch or cellulose copolymerized with acrylonitrile, followed by hydrolyzation and saponification.

5. A process for preparing the water-disintegrable environment-friendly macromolecular blend material according to claim 1, **characterized in that** it is a monomer-polymer blending polymerization process comprising:
□ adding a blending dispersant and an initiator, such as BPO, into monomers, which will form a rigid plastic after polymerization, heating the resultant mixture to 60 Deg C so as to dissolve the blending dispersant;
□ further adding water-absorbent polymer particles with particle size not more than 1 µm and stirring the resultant mixture for uniformity;
□ introducing to the system highly pure nitrogen to evacuate oxygen and then carrying out polymerization for 2 hours; and
□ raising the temperature to 70 Deg C and conducting the polymerization for another 2 hours.

6. A process for preparing the water-disintegrable environment-friendly macromolecular blend material according to claim 1, which is a reverse-phase emulsion polymerization process comprising the following steps: adding a blending emulsifier and an oil-soluble initiator into one or more oil-soluble monomers, which will form a rigid plastic after polymerization, heating the resultant mixture to 60 Deg C so as to dissolve the blending emulsifier; further adding one or more water-soluble monomers, a crosslinkable monomer, water, and a water-soluble initiator; agitating the resultant mixture to emulsify the system; introducing highly pure nitrogen gas to evacuate oxygen and then carrying out polymerization; and raising the temperature to conduct the polymerization further, **characterized in that**:
□ adding a blending emulsifier into one or more oil-soluble monomers that will form a rigid plastic after polymerization, heating the resultant mixture to 60 Deg C so as to dissolve the blending emulsifier, and then adding 0.1%-1 wt% of an oil-soluble initiator with respect to the oil-soluble monomer;
□ further adding 15%-25 wt% of one or more water-soluble monomers with respect to the oil-soluble monomers, 0.05%-0.5 wt% of a water-soluble crosslinkable monomer with respect to the water-soluble monomers, 0.1%-1 wt% of a water-soluble initiator with respect to the water-soluble monomers, and deionized water 2.5-3.5 times relative to the water-soluble monomers;
□ introducing highly pure nitrogen gas to evacuate oxygen for 0.5 hours; and
□ raising the temperature to carrying out polymerization, i.e. raising the temperature to 60 Deg C and conducting a polymerization for 2 hours, and then raising the temperature to 80 Deg C and conducting the polymerization for another 2 hours.

## Patentansprüche

1. In Wasser abbaubares umweltfreundliches makromolekulares Misch- bzw. Blendmaterial, **dadurch gekennzeichnet, dass** es durch Mischen einer Mischung aus einem starren Kunststoff, wie Polystyrol, wasserabsorbierenden Polymerteilchen, die Wasser enthalten oder kein Wasser enthalten, und einem Mischdispergiermittel hergestellt wird, wobei die wasserabsorbierenden Polymerteilchen eine durchschnittliche Teilchengröße von nicht mehr als 5 µm aufweisen und die Teilchen 7,5 - 25 Gew.-% des Gesamtgewichts des Mischmaterials ausmachen und das Mischdispergiermittel 0,5 - 15 Gew.-% des Gesamtgewichts des Mischmaterials ausmacht.

2. In Wasser abbaubares umweltfreundliches makromolekulares Mischmaterial gemäß Anspruch 1, **dadurch gekennzeichnet, dass** der starre Kunststoff ein Polymer von einem oder mehreren Monomeren ist, die aus der Gruppe gewählt sind, die aus Ethylen, Styrol, Chlorethylen, Methylmethacrylat und Vinylacetat besteht; wobei die wasserabsorbierenden Polymerteilchen vernetzte Polymerteilchen umfassen, die durch Homopolymerisation oder Copolymerisation von einem oder mehreren wasserlöslichen Monomeren, wie Methacrylat, Acrylat, Methacrylamid, Acrylamid und Natriumpropylensulfonat, mit einem vernetzbaren Monomer, wie Methylenbisacrylamid und Itaconat, gebildet werden; und das Mischdispergiermittel ein oder mehrere Dispergiermittel umfasst, die aus der Gruppe gewählt sind, die aus Sorbitanestern mit einem niedrigen HLB-Wert besteht, wie SPAN-80, SPAN-60 und SPAN-85, oder dies eine Zusammensetzung eines Sorbitanesters mit einem Polyethylenoxidethersurfaktant vom TX-Typ oder OP-Typ mit einem hohen HLB-Wert sein kann.

3. In Wasser abbaubares umweltfreundliches makromolekulares Mischmaterial gemäß Anspruch 1, **dadurch gekennzeichnet, dass** der starre Kunststoff ein zäh gemachtes Copolymer ohne vernetzte Struktur ist und aus einem oder mehreren Monomeren gebildet ist, die aus der Gruppe bestehend aus Ethylen, Styrol, Chlorethylen, Methylmethacrylat und Vinylacetat gewählt sind, copolymerisiert mit einer kleinen Menge von einem oder mehreren Monomeren, die aus der Gruppe bestehend aus Ethylacrylat, Butylacrylat, 2-Ethylhexylacrylat, Butadien und Isopren gewählt sind.

4. In Wasser abbaubares umweltfreundliches makromolekulares Mischmaterial gemäß Anspruch 1, **dadurch gekennzeichnet, dass** das wasserabsorbierende Polymer ein vernetztes Copolymer von Stärke oder Cellulose, pfropfmodifiziert mit einem wasserlöslichen Monomer, und ein Produkt, das durch Stärke oder Cellulose, copolymerisiert mit Acrylnitril, gebildet wird unter anschließender Hydrolyse und Verseifung.

5. Verfahren für die Herstellung des in Wasser abbaubaren umweltfreundlichen makromolekularen Mischmaterials gemäß Anspruch 1, **dadurch gekennzeichnet, dass** es sich um ein Monomer-Polymer-Mischpolymerisationsverfahren handelt, das Folgendes umfasst:
- Zugeben eines Mischdispergiermittels und eines Starters, wie BPO, zu Monomeren, welche einen starren Kunststoff nach der Polymerisation bilden, Erwärmen der resultierenden Mischung auf 60°C, um das Mischdispergiermittel aufzulösen;
- weiteres Zugeben von wasserabsorbierenden Polymerteilchen mit einer Teilchengröße von nicht mehr als 1 µm und Umrühren der resultierenden Mischung, um eine gleichförmige Mischung zu erhalten;
- Einführen von hochreinem Stickstoff in das System zur Evakuierung von Sauerstoff und anschließend für 2 Stunden Durchführen einer Polymerisation und
- Erhöhen der Temperatur auf 70°C und Durchführen der Polymerisation für weitere 2 Stunden.

6. Verfahren für die Herstellung des in Wasser abbaubaren umweltfreundlichen makromolekularen Mischmaterials gemäß Anspruch 1, welches ein Umkehrphasen-Emulsionspolymerisationsverfahren ist, welches die folgenden Schritte umfasst: Zugeben eines Misch emulgators und eines öllöslichen Starters zu einem oder mehreren öllöslichen Monomer(en), welche einen starren Kunststoff nach der Polymerisation bilden, Erwärmen der resultierenden Mischung auf 60°C, um den Mischemulgator aufzulösen; weiteres Zugeben von einem oder mehreren wasserlöslichen Monomeren, einem vernetzbaren Monomer, Wasser und einem wasserlöslichen Starter; Bewegen bzw. Rühren der resultierenden Mischung, um das System zu emulgieren; Einführen von hochreinem Stickstoffgas, um Sauerstoff zu evakuieren, und danach Durchführen einer Polymerisation; und Anheben der Temperatur, um die Polymerisation weiter durchzuführen, **dadurch gekennzeichnet, dass**:
- ein Mischemulgator zu einem oder mehreren öllöslichen Monomeren zugegeben wird, welcher einen starren Kunststoff nach der Polymerisation bildet, die resultierende Mischung auf 60°C erwärmt wird, um den Mischemulgator aufzulösen, und anschließend 0,1 - 1 Gew.-% eines öllöslichen Starters bezüglich des öllöslichen Monomers zugegeben werden;
- weiter 15 - 25 Gew.-% von einem oder mehreren wasserlöslichen Monomeren bezüglich der öllöslichen Monomere, 0,05 - 0,5 Gew.-% eines wasserlöslichen vernetzbaren Monomers bezüglich der wasserlöslichen Monomere, 0,1 - 1 Gew.-% eines wasserlöslichen Starters bezüglich der wasserlöslichen Monomere und entionisiertes Wasser des 2,5-3,5-Fachen im Verhältnis zu den wasserlöslichen Monomeren zugegeben werden;
- hochreines Stickstoffgas zur Evakuierung von Sauerstoff für 0,5 Stunden eingeführt wird; und
- die Temperatur zur Durchführung der Polymerisation angehoben wird, d. h. die Temperatur auf 60°C angehoben wird und für 2 Stunden eine Polymerisation durchgeführt wird und anschließend die Temperatur auf 80°C angehoben wird und die Polymerisation für weitere 2 Stunden durchgeführt wird.

## Revendications

1. Mélange macromoléculaire écologique désintégrable dans l'eau, **caractérisée en ce qu'**il est préparé par mélangeage d'un mélange d'un plastique rigide, tel que du polystyrène, des particules de polymère absorbant l'eau contenant ou ne contenant pas d'eau, et d'un dispersant de mélangeage, les particules de polymère absorbant l'eau ayant une taille moyenne de particules d'au plus 5 µm, et lesdites particules représentant de 7,5 à 25% en poids du poids total du mélange, et le dispersant de mélangeage représentant de 0,5 à 15% en poids du poids total du mélange.

2. Mélange macromoléculaire écologique désintégrable dans l'eau selon la revendication 1, **caractérisé en ce que** ledit plastique rigide est un polymère d'un ou plusieurs monomères choisis dans le groupe consistant en l'éthylène, le styrène, le chloroéthylène, le méthacrylate de méthyle et l'acétate de vinyle ; lesdites particules de polymère absorbant l'eau comprennent des particules de polymère réticulées formées par homopolymérisation ou copolymérisation d'un ou plusieurs monomères solubles dans l'eau, tel qu'un méthacrylate, un acrylate, du méthacrylamide, de l'acrylamide et du propylène-sulfonate de sodium, avec un monomère réticulable, tel que le méthylène bisacrylamide et l'itaconate ; et ledit dispersant de mélangeage comprend un ou plusieurs dispersants choisis dans le groupe formé par les esters de sorbitan ayant une valeur HLB basse, tels que SPAN-80, SPAN-60 et SPAN-85, ou bien il peut être une composition d'un ester de sorbitan avec un tensioactif poly(éthylène oxyde) éther de type TX ou de type OP ayant une valeur HLB élevée.

3. Mélange macromoléculaire écologique désintégrable dans l'eau selon la revendication 1, **caractérisé en ce que** ledit plastique rigide est un copolymère renforcé n'ayant pas de structure réticulée et il est formé à partir d'un ou plusieurs monomères choisis dans le groupe formé par l'éthylène, le styrène, le chloroéthylène, le méthacrylate de méthyle et l'acétate de vinyle, copolymérisés avec une petite quantité d'un ou plusieurs monomères choisis dans le groupe formé par l'acrylate d'éthyle, l'acrylate de butyle, l'acrylate de 2-éthylhexyle, le butadiène et l'isoprène.

4. Mélange macromoléculaire écologique désintégrable dans l'eau selon la revendication 1, **caractérisée en ce que** ledit polymère absorbant l'eau comprend un copolymère réticulé d'amidon ou de cellulose modifié par greffage avec un monomère soluble dans l'eau, et un produit formé par de l'amidon ou de la cellulose copolymérisé(e) avec de l'acrylonitrile, suivi d'une hydrolyse et d'une saponification.

5. Procédé de préparation d'un mélange macromoléculaire écologique désintégrable dans l'eau selon la revendication 1, **caractérisé en ce qu'**il s'agit d'un procédé de polymérisation en mélange monomère-polymère comprenant :
• l'ajout d'un dispersant de mélangeage et d'un amorceur, tel que du BPO, dans des monomères, qui formeront après polymérisation un plastique rigide, chauffage du mélange obtenu à 60°C de manière à dissoudre le dispersant de mélangeage ;
• ajout des particules de polymère absorbant l'eau ayant une taille de particules d'au plus 1 µm et agitation du mélange obtenu jusqu'à uniformité ;
• introduction, dans le système, d'azote hautement pur de manière à évacuer l'oxygène, puis polymérisation pendant 2 heures ; et
• augmentation de la température jusqu'à 70°C et polymérisation pendant 2 heures supplémentaires.

6. Procédé de préparation d'un mélange macromoléculaire écologique désintégrable dans l'eau selon la revendication 1, qui est un procédé de polymérisation en émulsion en phase inversée comprenant les étapes suivantes : ajout d'un émulsifiant de mélangeage et d'un amorceur soluble dans l'huile dans un ou plusieurs monomères solubles dans l'huile, qui formeront après polymérisation un plastique rigide, chauffage du mélange obtenu à 60°C de manière à dissoudre l'émulsifiant de mélangeage ; ajout d'un ou plusieurs monomères solubles dans l'eau, d'un monomère réticulable, d'eau et d'un amorceur soluble dans l'eau ; agitation du mélange obtenu pour émulsifier le système ; introduction d'azote hautement pur de manière à évacuer l'oxygène, puis polymérisation ; et augmentation de la température pour poursuivre la polymérisation, **caractérisé par** :
• l'ajout d'un émulsifiant de mélangeage dans un ou plusieurs monomères solubles dans l'huile, qui formeront après polymérisation un plastique rigide, chauffage du mélange obtenu à 60°C de manière à dissoudre l'émulsifiant de mélangeage, et ajout de 0, 1 % à 1 % en poids, rapporté au monomère soluble dans l'huile, d'un amorceur soluble dans l'huile ;
• ajout de 15% à 25% en poids, rapporté aux monomères solubles dans l'huile, d'un ou plusieurs monomères solubles dans l'eau, de 0,05% à 0,5% en poids, rapporté aux monomères solubles dans l'eau, d'un monomère réticulable soluble dans l'eau, de 0, 1 % à 1 % en poids, rapporté aux monomères solubles dans l'eau, d'un amorceur soluble dans l'eau, et de l'eau déminéralisée en une quantité 2,5 à 3,5 fois plus importante que celle des monomères solubles dans l'eau ;
• introduction pendant 0,5 heure d'azote hautement pur de manière à évacuer l'oxygène ; et
• augmentation de la température de manière à réaliser la polymérisation, à savoir augmentation de la température jusqu'à 60°C et polymérisation pendant 2 heures, et ensuite augmentation de la température jusqu'à 80°C et polymérisation pendant 2 heures supplémentaires.
